# DEMANDE DE BREVET EUROPEEN

(11) **EP 2 323 063 A1**
(43) Date de publication de la demande: **18.05.2011**
(21) Numéro de dépôt: 10187126.7
(22) Date de dépôt: 11.10.2010
(51) Int. Cl.: G06F 21/00

(54) **Procédé de simplification de la saisie, par un utilisateur, d'une séquence numérique de grande longueur, dispositif et produit programme d'ordinateur correspondants.**

(30) Priorité: 14.10.2009 FR 0957215
(71) Demandeur: Compagnie Industrielle et Financière d'Ingénierie "Ingenico", 92200 Neuilly sur Seine (FR)
(72) Inventeur: Naccache, David, 75018, PARIS (FR)
(74) Mandataire: Bioret, Ludovic

(57) **Abrégé**

L'invention concerne un procédé de simplification de la saisie, par un utilisateur, d'une séquence numérique de grande longueur, via un module de saisie d'un terminal de communications.

Selon l'invention, un tel procédé comprend les étapes suivantes :
- saisie, via ledit module de saisie, d'au moins un mot formant des séquences alphanumériques, le ou lesdits mots étant préalablement associés à ladite séquence numérique ;
- transfert du ou desdits mots à un module de conversion ;
- réception, par ledit module de saisie, de ladite séquence numérique, fournie par ledit module de conversion, après traitement desdits mots,

lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur.

## Description

### 1. Domaine de l'invention

Le domaine de l'invention est celui de la saisie, par des utilisateurs, de séquences numériques de grande longueur, sur des modules de saisie tels que des claviers d'ordinateur, des terminaux de paiement, etc.

Plus particulièrement, l'invention s'applique à la simplification, pour l'utilisateur, des procédures de saisie de telles séquences numériques. De telles procédures sont par exemple requises pour l'authentification d'un utilisateur lors de l'accès de celui-ci à un bâtiment, ou à un service à distance, ou encore lors de validation de transactions bancaires à distance.

### 2. Art antérieur

La sécurisation des lieux et des accès à distance à des services, par exemple via Internet, requiert de plus en plus une authentification des utilisateurs. Cette authentification peut être mise en oeuvre via différents moyens, et sous différentes formes, parmi lesquelles l'invitation à saisir une séquence numérique de grande longueur, généralement connue du seul utilisateur et du fournisseur de services.

Ainsi, il est d'usage très fréquent de sécuriser des accès à des services à un programme ou une base de données, sur un réseau privé ou sur Internet via la saisie de codes personnels, plus ou moins longs et donc plus ou moins contraignants à mémoriser et à saisir pour l'utilisateur.

Par exemple, les possibilités de transactions bancaires à distance sont aujourd'hui très nombreuses, et notamment via Internet qui offre la possibilité de régler des achats, de biens ou de services, en ligne, en utilisant une carte bancaire « classique ».

La plupart du temps, les achats en ligne par carte bancaire nécessitent la saisie d'au moins un numéro d'identification de carte bancaire par l'utilisateur, souvent accompagné de la saisie d'informations comme la date d'échéance de la carte, ou un code supplémentaire appelé cryptogramme.

Un inconvénient de ces techniques de transactions bancaires en ligne réside dans l'obligation, pour l'utilisateur, de saisir le numéro d'identification de sa carte bancaire, celui-ci étant composé d'une suite de seize chiffres, une date d'expiration et un code supplémentaire de trois chiffres (par exemple un code CHV, pour « Card Holder Vérification » en anglais), difficiles à retenir et à saisir de mémoire.

Ainsi, les avantages offerts à l'utilisateur par la possibilité des transactions bancaires à distance sont atténués par le fait que l'utilisateur doit avoir, à proximité, sa carte bancaire, ou un papier, sur lequel figure le numéro d'identification de sa carte bancaire. Un utilisateur peut ainsi changer d'avis et ne pas valider une telle transaction, simplement parce qu'il ne veut pas se déplacer pour aller chercher sa carte bancaire, ou qu'il ne l'a pas à proximité, causant ainsi un manque à gagner au marchand du site en ligne distant.

### 3. Objectifs de l'invention

L'invention a notamment pour objectif de pallier ces inconvénients de l'art antérieur.

Plus précisément, un objectif de l'invention est de fournir une technique permettant de simplifier, pour un utilisateur, la saisie de séquences numériques de grande longueur.

Un autre objectif de l'invention est de fournir une telle technique de simplification de la saisie de séquences numériques de grande longueur, qui soit relativement peu coûteuse et simple à mettre en oeuvre, et compatible avec les techniques actuelles.

### 4. Exposé de l'invention

L'invention propose une solution nouvelle qui ne présente pas l'ensemble de ces inconvénients de l'art antérieur, sous la forme d'un procédé de simplification de la saisie, par un utilisateur, d'une séquence numérique de grande longueur, via un module de saisie d'un terminal de communications.

Selon l'invention, un tel procédé comprend les étapes suivantes :
- saisie, via ledit module de saisie, d'au moins un mot formant des séquences alphanumériques, le ou lesdits mots étant préalablement associés à ladite séquence numérique ;
- transfert du ou desdits mots à un module de conversion ;
- réception, par ledit module de saisie, de ladite séquence numérique, fournie par ledit module de conversion, après traitement desdits mots,
lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur.

Ainsi, l'invention repose sur une approche nouvelle et inventive de la saisie, par un utilisateur, de séquences numériques de grande longueur, basée sur la conversion de telles séquences en suites de mots faciles à retenir pour un utilisateur, permettant ainsi d'éviter à ce dernier d'avoir à mémoriser une grande suite de chiffres.

En particulier, ladite étape de saisie d'au moins un mot est effectuée après une étape de requête d'utilisation d'un mode de saisie simplifiée par ledit utilisateur.

Ainsi, selon cette variante, l'utilisateur peut choisir le mode de saisie simplifiée, par exemple lorsqu'il est connecté à une page Internet, en cliquant sur un bouton lui permettant d'accéder à ce mode de saisie simplifiée.

De cette manière, le choix du mode de saisie est laissé à l'utilisateur, de façon à rester compatible avec le mode de fonctionnement « classique » qui consiste à saisir la séquence numérique de grande longueur.

Selon un aspect particulier de l'invention, le procédé de simplification met en oeuvre deux champs de saisie alternatifs, un premier champ permettant la saisie directe de ladite séquence numérique de grande longueur et un second champ permettant la saisie du ou desdits mots, et en ce que ledit transfert du ou desdits mots audit module de conversion est effectué lorsque ladite étape de saisie d'au moins un mot est effectuée dans ledit second champ.

Selon cette variante, deux champs de saisie sont offerts à l'utilisateur, l'un pour une saisie « normale » d'une séquence numérique de grande longueur et l'autre pour une saisie « simplifiée » d'une suite de mots. Dans ce dernier cas, le transfert des mots saisis vers le module de conversion n'est effectué que lorsque le champ de saisie simplifiée est rempli.

Là encore, la compatibilité avec le fonctionnement « classique » est préservée, notamment pour les utilisateurs n'ayant pas de suite de mots associée à la séquence numérique de grande longueur requise.

En particulier, lesdits mots sont choisis dans un dictionnaire comprenant uniquement des mots d'un langage courant pour ledit utilisateur.

Selon un aspect particulier de l'invention, le procédé de simplification comprend également une étape préalable de choix d'un dictionnaire parmi plusieurs.

Ainsi, les mots fournis à l'utilisateur, étant issus d'un dictionnaire ne comprenant que des mots du langage courant, sont faciles à mémoriser.

Le choix du dictionnaire peut être offert à l'utilisateur au moment de la phase d'initialisation préalable, de façon à ce que l'utilisateur choisisse un dictionnaire dans lequel les mots sont effectivement courants pour lui. Ceci peut être particulièrement intéressant par exemple dans le cas où la langue maternelle, ou préférée, d'un utilisateur n'est pas celle prévue par défaut par le système.

Par exemple, lesdits mots comprennent un nombre de lettres inférieur à un seuil prédéterminé.

Ainsi, les mots fournis à l'utilisateur étant de taille limitée, leur saisie est simplifiée en termes de nombre de caractères à saisir.

En particulier, des déclinaisons ou des conjugaisons desdits mots peuvent être choisies.

Ainsi, chaque mot peut être utilisé dans plusieurs déclinaisons, par exemple au singulier, au pluriel, au masculin, au féminin, à l'infinitif ou conjugué pour un verbe, etc, ce qui permet d'utiliser un bit d'encodage supplémentaire par mot. De cette manière, le nombre de mots utilisables est plus important, et cela permet d'encoder des séquences numériques de plus grande longueur.

Selon un aspect particulier de l'invention, ladite séquence numérique correspond à un numéro d'identification bancaire, ladite saisie par un utilisateur étant requise pour l'authentification d'une transaction bancaire à distance.

Ainsi, la présente invention s'applique particulièrement aux transactions bancaires à distance à l'aide d'une carte bancaire, qui requièrent classiquement la saisie d'un long code d'identification bancaire, figurant sur la carte bancaire, difficile à mémoriser du fait de sa longueur.

Selon ce mode de réalisation de l'invention, un utilisateur invité à saisir un identifiant de carte bancaire pour valider une transaction bancaire à distance, peut donc saisir à la place une suite de x mots facile à retenir, rendant plus ergonomique et conviviale la transaction, en lui évitant d'avoir à disposition sa carte bancaire sur laquelle figure le numéro d'identification habituellement requis.

L'invention concerne également un dispositif de simplification de la saisie, par un utilisateur, d'une séquence numérique de grande longueur, associé à un module de saisie d'un terminal de communications, et comprenant:
- des moyens de saisie, via ledit module de saisie, d'au moins un mot formant des séquences alphanumériques, le ou lesdits mots étant préalablement associés à ladite séquence numérique ;
- des moyens de transfert du ou desdits mots à un module de conversion ;
- des moyens de réception, via ledit module de saisie, de ladite séquence numérique, fournie par ledit module de conversion, après traitement desdits mots,
lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur.

Un tel dispositif est notamment apte à mettre en oeuvre les étapes du procédé de simplification décrit précédemment. Il s'agit par exemple d'un ordinateur, terminal de type radiotéléphone, assistant personnel de type PDA (en anglais « Personal Digital Assistant »), etc.

Enfin, un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de simplification de la saisie, par un utilisateur, d'une séquence numérique de grande longueur, tel que décrit précédemment.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre les principales étapes du procédé de simplification de la saisie, par un utilisateur, d'une séquence numérique de grande longueur selon un mode de réalisation particulier de l'invention ;
- la figure 2 illustre la phase d'initialisation du procédé de simplification de la saisie, par un utilisateur, d'une séquence numérique de grande longueur selon un mode de réalisation particulier de l'invention ;
- les figures 3a, 3b et 4a, 4b illustrent deux exemples de saisie simplifiée selon deux modes de réalisation de l'invention,
- la figure 5 présente la structure d'un dispositif de simplification de la saisie, par un utilisateur, d'une séquence numérique de grande longueur mettant en oeuvre la technique de simplification de la saisie, par un utilisateur, d'une séquence numérique de grande longueur selon un mode de réalisation de l'invention.

### 6. Description d'un mode de réalisation de l'invention

### 6.1 Principe général

Le principe général de l'invention repose sur la conversion d'une séquence numérique de grande longueur en un ou plusieurs mots d'un dictionnaire prédéterminé, constitué de mots signifiants pour un utilisateur, et sur la saisie de ce ou ces mots à la place de la séquence numérique de grande longueur, de façon à rendre moins contraignante cette saisie pour l'utilisateur.

En effet, pour un utilisateur, la mémorisation d'un ou plusieurs mots signifiants est beaucoup plus simple que la mémorisation d'une séquence numérique de grande longueur. Il est donc plus simple pour un utilisateur de saisir ce ou ces mots, de mémoire, que de saisir une séquence numérique de grande longueur, difficile à mémoriser.

De plus, les risques d'erreur de saisie sont plus nombreux lorsque le nombre de caractères à saisir est important. Le procédé de simplification selon l'invention permet donc de réduire le risque d'erreurs de saisie et ainsi permet un gain de temps pour l'utilisateur.

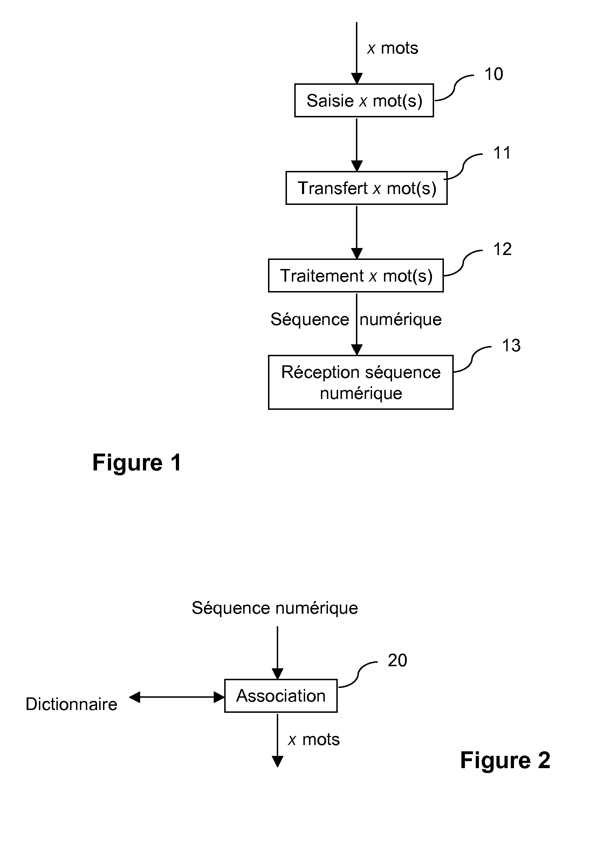

Les figures 1 et 2 illustrent les principales étapes du procédé de simplification de la saisie, par un utilisateur, d'une séquence numérique de grande longueur, selon un mode de réalisation de l'invention.

On considère tout d'abord qu'un utilisateur bénéficie de la possibilité de saisir de manière simplifiée une séquence numérique de grande longueur, et qu'il obtient, lors d'une phase préalable d'initialisation, une suite de x mots, associée à ladite séquence numérique de grande longueur.

Comme illustré en figure 2, cette phase préalable d'initialisation comprend une étape 20 d'association, de façon unique, d'une suite de x mots à ladite séquence numérique de grande longueur, à l'aide d'un algorithme prédéterminé et d'un dictionnaire comprenant des mots signifiants pour l'utilisateur. Cette phase préalable d'initialisation peut par exemple avoir lieu lors de l'enregistrement de l'utilisateur à un service de simplification de la saisie d'un code long, ce dernier lui servant par exemple à s'authentifier auprès d'un service sur Internet, ou à valider une transaction bancaire sur un site marchand sur Internet, etc.

Une fois la phase préalable d'initialisation terminée, l'utilisateur peut se servir des x mots à la place de la séquence numérique de grande longueur, comme illustré en figure 1.

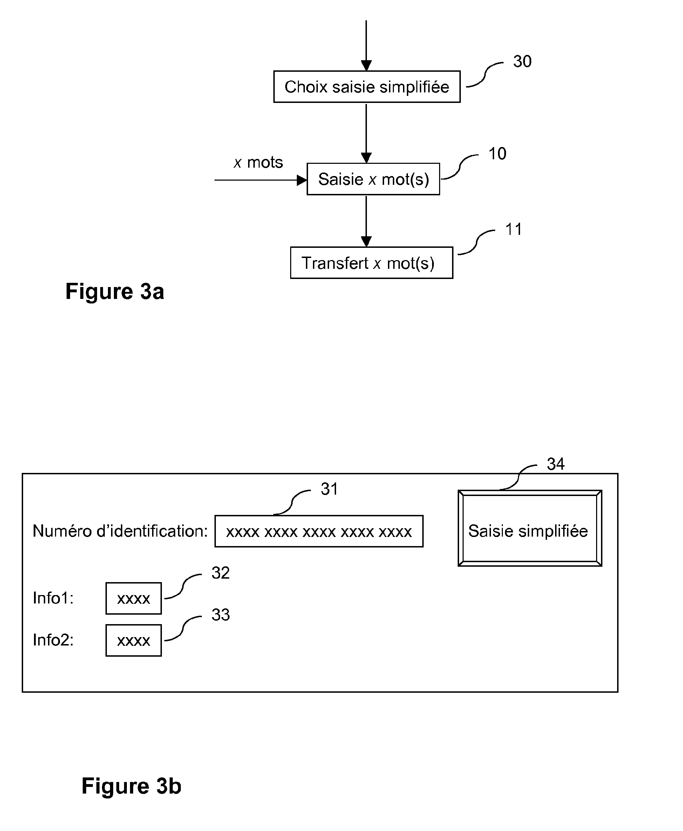

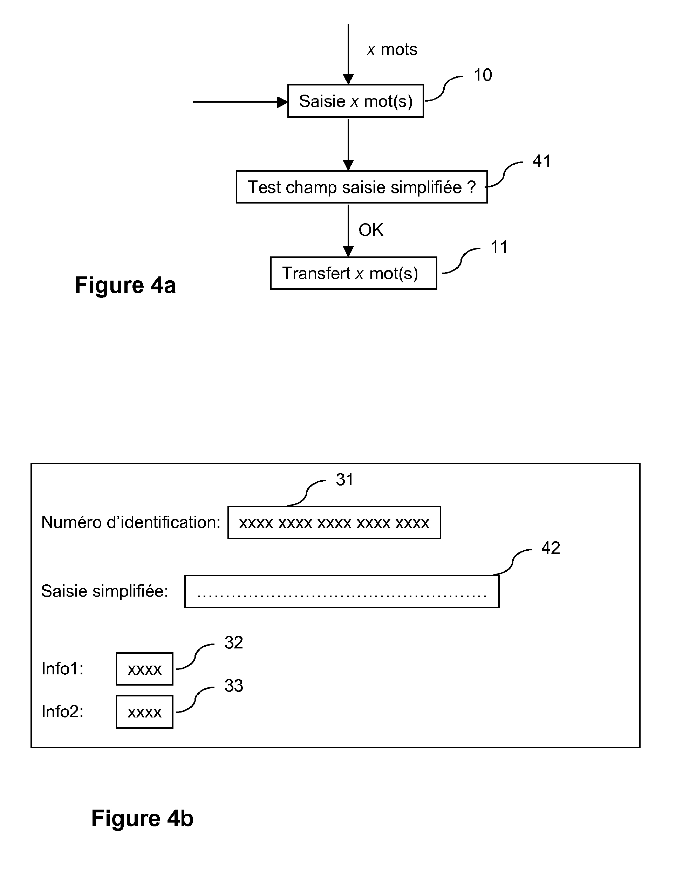

Selon ce mode de réalisation de l'invention, par exemple en vue d'une authentification, l'utilisateur saisit les x mots, via un module de saisie, lors d'une étape de saisie 10. Les x mots sont ensuite transférés, lors d'une étape de transfert 11, vers un module de conversion. On présente plus loin deux exemples de saisie simplifiée selon deux variantes de réalisation, illustrées respectivement en figures 3a, 3b et 4a, 4b.

Un module de saisie peut être par exemple un clavier (d'ordinateur, de terminal de paiement électronique, de PDA, de téléphone, etc), un écran tactile, ou un module de saisie vocale. Le module de saisie est préférentiellement relié, ou intégré à un module d'affichage permettant à l'utilisateur de visualiser la séquence numérique, ou les x mots saisis.

Le module de conversion traite ensuite les x mots reçus, lors d'une étape 12 de traitement, de façon à obtenir la séquence numérique (de grande longueur) correspondante. Pour ce faire, il applique l'algorithme inverse de celui mis en oeuvre lors de la phase préalable d'initialisation pour obtenir les x mots à partir de la séquence numérique. Des exemples d'algorithmes utilisés sont décrits plus loin.

Selon ce mode de réalisation, le module de conversion est indépendant du module de saisie, et présente le même niveau de sécurité.

Le module de conversion peut être par exemple un logiciel accessible par Internet, de manière sécurisé.

La séquence numérique ainsi obtenue par le module de conversion est transmise au module de saisie, qui la reçoit lors d'une étape 13, en vue de son utilisation pour la suite de la procédure d'authentification.

### 6.2 Exemples de réalisation

Une des applications possibles de l'invention concerne les transactions bancaires à distance, et en particulier la simplification de la saisie du numéro d'identification bancaire nécessaire à la validation de la transaction par l'utilisateur.

En effet, lorsqu'un utilisateur souhaite effectuer une transaction à distance avec une carte bancaire, par exemple via Internet, sur un site marchand, celui-ci requiert des informations d'identification de la carte bancaire. Ces informations sont requises de manière sécurisée, de telle sorte qu'elles ne puissent pas être utilisées par une personne malveillante. Cette sécurité est notamment apportée par des systèmes de paiement sécurisé via des connexions sécurisées, sous le contrôle des organismes bancaires.

Classiquement, les informations requises sont celles figurant sur la carte bancaire en question, à savoir le numéro d'identification bancaire de seize chiffres, la date d'expiration de la carte et un numéro supplémentaire de sécurité, appelé cryptogramme, qui figure généralement au dos de la carte.

L'utilisateur doit donc avoir à disposition sa carte bancaire, s'il ne connaît pas de mémoire toutes ces informations, ce qui est relativement difficile, en particulier compte tenu de la longueur du numéro d'identification.

La présente invention, selon ce mode de réalisation, permet donc de convertir un numéro d'identification de carte bancaire en un code facile à retenir pour un utilisateur, par exemple une suite de mots issus d'un dictionnaire, que l'utilisateur pourra saisir à la place du numéro d'identification.

Par exemple, pour un utilisateur français, un numéro d'identification de carte bancaire est converti, de façon unique, en une suite de mots français. Cette suite de mots peut par exemple comprendre quatre mots et est fournie à l'utilisateur par le procédé de simplification de l'invention, lors de l'étape d'initialisation précédemment décrite.

Plus particulièrement, selon ce mode de réalisation, on peut prévoir que l'utilisateur souscrive à un service offert par exemple par son organisme bancaire, lui permettant de bénéficier de la possibilité de la saisie simplifiée de son numéro d'identification bancaire pour des transactions à distance. Lors de la phase d'initialisation, l'utilisateur fournit le numéro d'identification bancaire figurant sur sa carte bancaire et reçoit en retour une suite de quatre mots français.

Préférentiellement, ces quatre mots sont issus d'un dictionnaire de langue française, comprenant uniquement des mots du langage courant, jugés faciles à retenir pour un utilisateur. De plus, ces mots sont également choisis de taille limitée, là encore pour en simplifier la mémorisation, et ultérieurement la saisie.

Selon une variante, chaque mot peut être utilisé dans plusieurs déclinaisons, par exemple au singulier, au pluriel, au masculin, au féminin, à l'infinitif ou conjugué pour un verbe, etc, ce qui permet d'utiliser un bit d'encodage supplémentaire par mot.

Selon une variante, on peut également prévoir que l'utilisateur ait le choix du dictionnaire, de façon à offrir à un utilisateur dont la langue maternelle ou préférée n'est pas le français la possibilité d'obtenir une suite de x mots dans une autre langue.

Un algorithme de conversion d'un numéro d'identification bancaire en une suite de x mots peut par exemple mettre en oeuvre un découpage des seize chiffres du numéro d'identification bancaire en quatre nombres, suivi de l'application d'une règle d'association d'un nombre avec un mot du dictionnaire. Cette règle d'association peut par exemple associer un nombre avec le mot ayant la place d'apparition dans le dictionnaire correspondant à ce nombre (au nombre « 1234 » correspond le 1234^{ème} mot du dictionnaire).

Selon une autre variante, l'algorithme peut être basé sur un traitement préliminaire des seize chiffres, par exemple un hachage cryptographique des chiffres, pour arriver à un nombre de y chiffres, correspondant chacun à un mot du dictionnaire selon une règle d'association particulière.

Il est important de noter que la suite de x mots associée, de façon unique, au numéro d'identification de carte bancaire est fournie à l'utilisateur pendant cette phase d'initialisation du procédé selon l'invention, et non choisie par l'utilisateur lui-même. Ainsi, cette suite de x mots n'est pas sauvegardée dans une base de données car elle peut être retrouvée à tout moment par le procédé selon l'invention, en appliquant l'algorithme de conversion au numéro d'identification de carte bancaire. Cette caractéristique offre plus de sécurité dans la mesure où la suite de mots n'est pas accessible dans une base de données.

Une fois la suite de x mots fournie à l'utilisateur, celui-ci peut donc s'en servir lors de transactions bancaires à distance, par exemple au moment de valider une transaction par Internet sur un site marchand.

On présente maintenant, en relation avec les figures 3a, 3b et 4a, 4b, plusieurs variantes de réalisation du procédé de simplification de l'invention, pour ce qui concerne particulièrement la saisie simplifiée proprement dite.

Par exemple, selon la variante illustrée en figure 3a et 3b, au moment où l'utilisateur est invité à remplir les différents champs 31, 32, 33, d'identification de sa carte bancaire, sur une page Internet sécurisée, il a également la possibilité de choisir, lors d'une étape 30, un mode de saisie simplifiée, en cliquant sur un bouton 34. Cette action 30 ouvre par exemple une autre fenêtre de saisie dans laquelle l'utilisateur peut saisir les x mots, lors d'une étape 10 de saisie. Ces x mots sont ensuite transférés au module de conversion, lors d'une étape de transfert 11, déjà décrite précédemment. Le module de conversion effectue ensuite le traitement adéquat sur les x mots afin de délivrer le numéro d'identification de carte bancaire correspondant, pour permettre de valider la transaction, selon une technique connue de sécurisation de transactions bancaires par Internet.

Selon une autre variante, illustrée en figures 4a et 4b, la page Internet sécurisée invitant l'utilisateur à remplir les champs d'identification de sa carte bancaire propose également un champ 42 spécifique à la saisie simplifiée. L'utilisateur peut donc choisir le mode de saisie qu'il préfère, simplement en remplissant le champ adéquat. Si l'utilisateur choisit le mode de saisie simplifiée, il remplit alors le champ 42, lors d'une étape 10 de saisie. Lorsqu'il valide sa saisie, un test est effectué sur le champ de saisie, afin de déterminer s'il s'agit du champ 42 de saisie simplifiée. Si tel est le cas, alors les x mots saisis sont transférés, lors d'une étape 11 de transfert déjà décrite précédemment. Le module de conversion effectue ensuite le traitement adéquat sur les x mots afin de délivrer le numéro d'identification de carte bancaire correspondant, pour permettre de valider la transaction, selon une technique connue de sécurisation de transactions bancaires par Internet.

### 6.3 Structure d'un dispositif de simplification de saisie

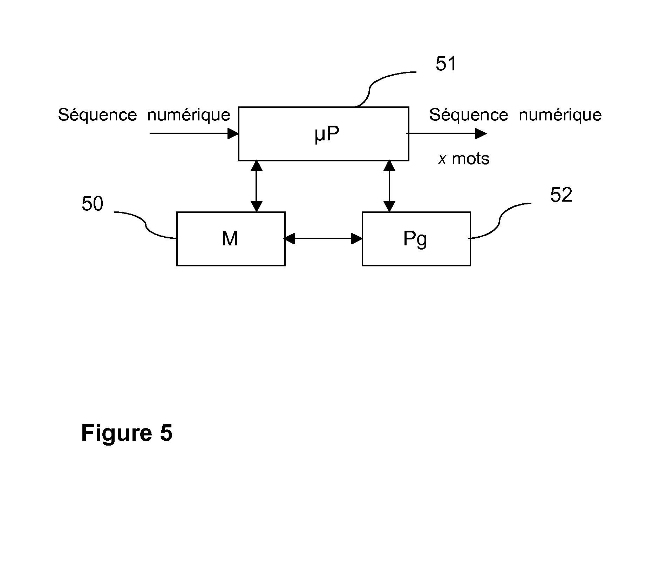

On présente finalement, en relation avec la figure 5, la structure simplifiée d'un dispositif de simplification de saisie mettant en oeuvre en oeuvre une technique de simplification de saisie d'une séquence numérique de grande longueur selon un mode de réalisation de l'invention.

Un tel dispositif de signature comprend une mémoire 51 constituée d'une mémoire tampon, une unité de traitement 52, équipée par exemple d'un microprocesseur µP, et pilotée par le programme d'ordinateur 53, mettant en oeuvre le procédé de simplification de saisie selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une séquence numérique de grande longueur. Le microprocesseur de l'unité de traitement 52 met en oeuvre les étapes du procédé de simplification de saisie décrit précédemment, selon les instructions du programme d'ordinateur 53. Pour cela, le dispositif de simplification de saisie comprend, outre la mémoire tampon 51, des moyens de saisie d'au moins un mot formant des séquences alphanumériques, le ou lesdits mots étant préalablement associés à ladite séquence numérique, des moyens de transfert du ou desdits mots à un module de conversion, des moyens de réception, via ledit module de saisie, de ladite séquence numérique, fournie par ledit module de conversion, après traitement desdits mots, lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur. Ces moyens sont pilotés par le microprocesseur de l'unité de traitement 52.

L'unité de traitement 52 fournit donc une séquence numérique de grande longueur égale à celle fournie par l'utilisateur lors de la phase d'initialisation, ainsi qu'une séquence de x mots correspondant à la simplification de ladite séquence numérique de grande longueur.

## Revendications

1. Procédé de simplification de la saisie, par un utilisateur, d'une séquence numérique de grande longueur, via un module de saisie d'un terminal de communications, **caractérisé en ce qu'**il comprend les étapes suivantes :
- saisie, via ledit module de saisie, d'au moins un mot formant des séquences alphanumériques, le ou lesdits mots étant préalablement associés à ladite séquence numérique ;
- transfert du ou desdits mots à un module de conversion ;
- réception, par ledit module de saisie, de ladite séquence numérique, fournie par ledit module de conversion, après traitement desdits mots,
lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur.

2. Procédé de simplification selon la revendication 1, **caractérisé en ce que** ladite étape de saisie d'au moins un mot est effectuée après une étape de requête d'utilisation d'un mode de saisie simplifiée par ledit utilisateur.

3. Procédé de simplification selon la revendication 1, **caractérisé en ce qu'**il met en oeuvre deux champs de saisie alternatifs, un premier champ permettant la saisie directe de ladite séquence numérique de grande longueur et un second champ permettant la saisie du ou desdits mots, et **en ce que** ledit transfert du ou desdits mots audit module de conversion est effectué lorsque ladite étape de saisie d'au moins un mot est effectuée dans ledit second champ.

4. Procédé de simplification selon l'une quelconque des revendications 1 à 3, **caractérisé en ce que** lesdits mots sont choisis dans un dictionnaire comprenant uniquement des mots d'un langage courant pour ledit utilisateur.

5. Procédé de simplification selon l'une quelconque des revendications 1 à 4, **caractérisé en ce qu'**il comprend également une étape préalable de choix d'un dictionnaire parmi plusieurs.

6. Procédé de simplification selon l'une quelconque des revendications 1 à 5, **caractérisé en ce que** lesdits mots comprennent un nombre de lettres inférieur à un seuil prédéterminé.

7. Procédé de simplification selon l'une quelconque des revendications 1 à 6, **caractérisé en ce que** des déclinaisons ou des conjugaisons desdits mots peuvent être choisies.

8. Procédé de simplification selon l'une quelconque des revendications 1 à 7, **caractérisé en ce que** ladite séquence numérique correspond à un numéro d'identification bancaire, ladite saisie par un utilisateur étant requise pour l'authentification d'une transaction bancaire à distance.

9. Dispositif de simplification de la saisie, par un utilisateur, d'une séquence numérique de grande longueur, **caractérisé en ce que** ledit dispositif est associé à un module de saisie d'un terminal de communications, et **en ce qu'**il comprend :
- des moyens de saisie, via ledit module de saisie, d'au moins un mot formant des séquences alphanumériques, le ou lesdits mots étant préalablement associés à ladite séquence numérique ;
- des moyens de transfert du ou desdits mots à un module de conversion ;
- des moyens de réception, via ledit module de saisie, de ladite séquence numérique, fournie par ledit module de conversion, après traitement desdits mots,
lesdits mots ayant été déterminés et fournis à l'utilisateur par ledit module de conversion, lors d'une phase d'initialisation préalable, à l'aide d'un algorithme de conversion associant de façon unique à une séquence numérique de grande longueur le ou lesdits mots, choisis dans un dictionnaire prédéterminé constitué de mots signifiants pour l'utilisateur.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de simplification de la saisie, par un utilisateur, d'une séquence numérique de grande longueur, selon l'une quelconque des revendications 1 à 8.
